(19) Europäisches Patentamt / European Patent Office / Office européen des brevets

(11) **EP 4 026 623 A1**

(12) **EUROPEAN PATENT APPLICATION**
published in accordance with Art. 153(4) EPC

(43) Date of publication:
**13.07.2022 Bulletin 2022/28**

(21) Application number: **20861737.3**

(22) Date of filing: **02.09.2020**

(51) International Patent Classification (IPC):
**B05D 7/24** (2006.01)    **B32B 27/00** (2006.01)
**B32B 27/30** (2006.01)    **C09D 153/00** (2006.01)
**C09D 201/00** (2006.01)

(52) Cooperative Patent Classification (CPC):
**B05D 7/24; B32B 27/00; B32B 27/30;
C09D 153/00; C09D 201/00**

(86) International application number:
**PCT/JP2020/033173**

(87) International publication number:
**WO 2021/045072 (11.03.2021 Gazette 2021/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2019  JP 2019160616
21.04.2020  JP 2020075518**

(71) Applicant: **TOPPAN INC.
Tokyo 110-0016 (JP)**

(72) Inventor: **GODA, Takenori
Tokyo 110-0016 (JP)**

(74) Representative: **Plasseraud IP
66, rue de la Chaussée d'Antin
75440 Paris Cedex 09 (FR)**

(54) **COATING AGENT FOR MODIFYING HEAT SEAL BASE MATERIAL, LAMINATE, AND METHOD FOR PRODUCING SAME**

(57)    A coating agent for modifying a heat sealable substrate is a coating agent applied to a heat sealing surface of a heat sealable substrate, and contains a block copolymer that can form a lamellar microphase separation structure, and a liquid medium. The block copolymer has a first block (A1) forming a non-adsorptive layer, and a block (B1) forming a layer that can be adhered to or fused to the heat sealable substrate. The first block (A1) is formed of a copolymer having nitrile group-containing (meth)acrylic monomer units and alkyl group-containing (meth)acrylic monomer units, and the proportion of the alkyl group-containing (meth)acrylic monomer units is 0.1 mol or more and 0.8 mol or less with respect to 1 mol of the nitrile group-containing (meth)acrylic monomer units.

FIG.1

EP 4 026 623 A1

**Description**

[Technical Field]

The present invention relates to coating agents for modifying a heat sealable substrate, laminates, and methods of producing the laminates.

The present application is based on and claims the benefits of priorities from earlier Japanese Patent Application Nos. 2019-160616 and 2020-075518 filed September 3, 2019 and April 21, 2020, respectively, the descriptions of both of which are incorporated herein by reference.

[Background Art]

Packaging materials for packaging pharmaceuticals, cosmetics, and the like have outermost layers containing non-adsorptive materials which are less likely to adsorb functional ingredients contained in the medicaments, cosmetics, and the like, to prevent the functional ingredients from being adsorbed by the packaging materials and losing functions thereof. As non-adsorptive materials, there are known, for example, ethylene-vinyl alcohol copolymers (EVOH), polyacrylonitrile (PAN), cyclic olefin copolymers (COC, e.g., ethylene-norbornene copolymer), and the like. Of these materials, PAN is known to have good non-adsorption characteristics. Therefore, PAN as a sealant layer is extruded for lamination with other plastic films and such laminated films are used as packaging materials for medicines such as transdermal drugs, or packaging materials for cosmetics containing medicinal ingredients or aroma ingredients (PTL 1).

PAN films, which are formed by extrusion and have a thickness of about 20 $\mu$m to 30 $\mu$m, use expensive PAN resins, and therefore cost reduction is required. However, since there is a limitation in reducing the thickness of films formed by extrusion, it is difficult to meet the demand for cost reduction when using extrusion.

In this regard, there has been proposed a method of reducing cost by reducing the volume of the sealant layer by coating a substrate with a non-adsorptive heat sealable composition containing PAN resin particles, polyester resin particles, and a solvent (PTL 2).

Furthermore, there has also been proposed a method of forming a non-adsorptive layer by coating a substrate with a non-adsorptive layer-forming coating agent which contains a main resin formed of a polymer obtained by copolymerizing a nitrile group-containing acrylic monomer with a reactive functional group-containing acrylic monomer, an isocyanate-based curing agent, and a dispersion medium (PTLs 3 and 4).

[Citation List]

[Patent Literature]

   PTL 1: JP H8-143452 A
   PTL 2: JP 5656694 B
   PTL 3 : JP 6241590 B
   PTL 4: JP 6402973 B

[Summary of the Invention]

[Technical Problem]

However, the sealant layer, which is formed of a non-adsorptive heat sealable composition described in PTL 2, is a film of a mixture of PAN and a polyester resin, and therefore, is inferior in non-adsorptivity to a film made of only PAN.

The non-adsorptive layer formed of a coating agent described in PTL 3 or 4 lacks heat sealability. Therefore, in order to subject the obtained laminate to heat sealing processing, the coating agent is required to be applied in a pattern in which the non-adsorptive layer is not formed in heat sealing portions. Therefore, this process complexity raises issues of cost increase, deterioration in non-adsorptivity that would be caused by misalignment, and other issues.

The present invention aims to provide a coating agent for modifying a heat sealable substrate, which is capable of imparting good non-adsorptivity to a heat sealing surface of the heat sealable substrate and also has good heat sealability after being imparted with non-adsorptivity, and to provide a laminate having a heat sealing surface having good non-adsorptivity and good heat sealability, and a method of producing the laminate.

[Solution to Problem]

The present invention has the following aspects.

[1] A coating agent for modifying a heat sealable substrate, the coating agent being applied to a heat sealing surface of a heat sealable substrate, wherein

the coating agent contains a block copolymer that can form a lamellar microphase separation structure, and a liquid medium;
the block copolymer contains a first block (A1) forming a non-adsorptive layer, and a block (B1) forming a layer that can be adhered to or fused to the heat sealable substrate; and
the first block (A1) is formed of a copolymer having nitrile group-containing (meth)acrylic monomer units and alkyl group-containing (meth)acrylic monomer units, the alkyl group-containing (meth)acrylic monomer units being contained in a proportion of 0.1 mol or more and 0.8 mol or less with respect to 1 mol of the nitrile group-containing (meth)acrylic monomer units.

[2] The coating agent for modifying a heat sealable substrate according to [1], wherein the block copolymer has a weight average molecular weight of 1,000 or more.
[3] The coating agent for modifying a heat sealable substrate according to [1] or [2], wherein the block copolymer is a diblock copolymer in which, the first block (A1) has a volume fraction of 0.35 or more and 0.65 or less.
[4] The coating agent for modifying a heat sealable substrate according to any one of [1] to [3], wherein the block (B1) is formed of a polymer having nitrile group-containing (meth)acrylic monomer units, a copolymer having reactive functional group-containing (meth)acrylic monomer units and nitrile group-containing (meth)acrylic monomer units, a polymer having (meth)acrylic monomer units containing a side group that can be adhered to or fused to the heat sealable substrate, a polymer having functional group-containing vinyl monomer units, or a polymer having cyclic olefin units.
[5] A laminate, wherein

the laminate includes a heat sealable substrate, and a coating layer formed on a heat sealing surface of the heat sealable substrate;
the coating layer has a lamellar microphase separation structure formed of a block copolymer;
the block copolymer contains a first block (A1) forming a non-adsorptive layer, and a block (B1) forming a layer that can be adhered to or fused to the heat sealable substrate; and
the first block (A1) is formed of a copolymer having nitrile group-containing (meth)acrylic monomer units and alkyl group-containing (meth)acrylic monomer units, the alkyl group-containing (meth)acrylic monomer units being contained in a proportion of 0.1 mol or more and 0.8 mol or less with respect to 1 mol of the nitrile group-containing (meth)acrylic monomer units.

[6] A method of producing a laminate, including applying the coating agent for modifying a heat sealable substrate according to any of [1] to [4] to a heat sealing surface of a heat sealable substrate, and heat-treating the applied coating agent.
[7] A coating agent for modifying a heat sealable substrate, the coating agent being applied to a heat sealing surface of a heat sealable substrate, wherein

the coating agent contains a block copolymer, and a liquid medium;
the block copolymer contains a second block (A2) forming a non-adsorptive layer, and a block (B2) forming a layer that can be adhered to or fused to the heat sealable substrate;
the second block (A2) is any one of a nitrile group-containing (meth)acrylic polymer, a copolymer obtained by copolymerizing reactive functional group-containing (meth)acrylic monomer units, which can react with a curing agent, with nitrile group-containing (meth), a functional group-containing vinyl polymer, and a cyclic olefin polymer; and
the second block (A2) has a volume fraction of 0.35 or more and 0.65 or less.

[8] The coating agent for modifying a substrate according to [7], wherein the block copolymer has a weight average molecular weight of 1,000 or more.
[9] The coating agent for modifying a substrate according to [7] or [8], wherein the block (B2) is a block different from the second block (A2) and is any one of a nitrile group-containing (meth)acrylic polymer, a copolymer obtained by copolymerizing reactive functional group-containing (meth)acrylic monomer units, which can react with a curing agent and a reactive functional group on a substrate surface, with nitrile group-containing (meth)acrylic monomer units, a (meth)acrylic polymer containing a side chain that can be adhered to or fused to a thermoplastic resin substrate or a copolymer thereof, a functional group-containing vinyl polymer, and a cyclic olefin copolymer.

[10] A laminate, wherein

the laminate includes a heat sealable substrate, and a coating layer formed on a heat sealing surface of the heat sealable substrate;

the coating layer has a lamellar microphase separation structure formed of a block copolymer;

the block copolymer contains a second block (A2) forming a non-adsorptive layer, and a block (B2) forming a layer that can be adhered to or fused to the heat sealable substrate;

the second block (A2) is any one of a nitrile group-containing (meth)acrylic polymer, a copolymer obtained by copolymerizing reactive functional group-containing (meth)acrylic monomer units, which can react with a curing agent, with nitrile group-containing (meth), a functional group-containing vinyl polymer, and a cyclic olefin polymer; and

the second block (A2) has a volume fraction of 0.35 or more and 0.65 or less.

[11] A method of producing a laminate, including applying the coating agent for modifying a heat sealable substrate according to any of [7] to [9] to a heat sealing surface of a heat sealable substrate, and heat-treating the applied coating agent.

The present invention has the following another aspect.

[12] A coating agent for modifying a substrate, the coating agent being applied to a heat sealing surface of a resin substrate having heat sealability, characterized in that

the coating agent contains a block copolymer, and a dispersion medium; and

the block copolymer contains a block forming a non-adsorptive layer, and a block forming a layer that can be adhered to or fused to the resin substrate;

[13] The coating agent for modifying a substrate according to [12], characterized in that the block copolymer has a weight average molecular weight of 1,000 or more, and the block forming the non-adsorptive layer of the block copolymer has a volume fraction in the range of 0.35 to 0.65.

[14] The coating agent for modifying a substrate according to [12] or [13], characterized in that the block forming the non-adsorptive layer of the block copolymer is formed of any one of a nitrile group-containing (meth)acrylic polymer, a copolymer obtained by copolymerizing reactive functional group-containing (meth)acrylic monomer units, which can react with a curing agent, with nitrile group-containing (meth), a functional group-containing vinyl polymer, and a cyclic olefin polymer.

[15] The coating agent for modifying a substrate according to any one of [12] to [14], characterized in that the block forming a layer that can be adhered to or fused to the resin substrate of the block copolymer is a block different from the block forming a non-adsorptive layer, and is formed of any one of a nitrile group-containing (meth)acrylic polymer, a copolymer obtained by copolymerizing reactive functional group-containing (meth)acrylic monomer units, which can react with a curing agent or a reactive functional group on a substrate surface, with nitrile group-containing (meth)acrylic monomer units, a (meth)acrylic polymer containing a side chain that can be adhered to or fused to a thermoplastic resin substrate or a copolymer thereof, a functional group-containing vinyl polymer, and a cyclic olefin copolymer.

[16] A laminate, characterized in that

the laminate includes

a resin substrate having heat sealability, and

a lamellar microphase separation structure formed of a block copolymer on a heat sealing surface of the resin substrate; and

the block copolymer contains a block forming a non-adsorptive layer, and a block forming a layer that can be adhered to or fused to the resin substrate.

[Advantageous Effects of the Invention]

The coating agent for modifying a heat sealable substrate according to the present invention can impart good non-adsorptivity to the heat sealing surface of a heat sealable substrate, and can impart good heat sealability thereto after impartment of non-adsorptivity.

The laminate of the present invention has a heat sealing surface having good non-adsorptivity and good heat sealability.

The method of producing a laminate of the present invention can produce a laminate with a heat sealing surface having good non-adsorptivity and good heat sealability.

[Brief Description of the Drawings]

Fig. 1 is a schematic diagram illustrating an example of a block copolymer according to an aspect of the present invention.

Fig. 2 is a schematic diagram illustrating an example of a laminate according to an aspect of the present invention.

[Description of the Embodiments]

The present invention will be described, referring to some embodiments. The present embodiment is described in detail for better understanding of the principle of the invention, and should not be construed to limit the present invention unless otherwise specified.

In the present invention, the term non-adsorptive layer refers to a layer having non-adsorptivity.

The term non-adsorptivity refers to properties which resist adsorption of prescribed substances such as active ingredients contained in pharmaceuticals, cosmetics, foods, and the like.

The term heat sealable substrate refers to a substrate having heat sealability.

The term heat sealability refers to properties which make substrates fusible with each other due to heat.

The term weight average molecular weight (also termed Mw hereinafter) refers to a value measured using gel permeation chromatography (GPC) and expressed relative to a polyethylene glycol standard.

The term (meth)acrylic monomer refers to a compound having a (meth)acryloyl group.

The term (meth)acryloyl group is a general term used for acryloyl groups and methacryloyl groups.

The term (meth)acrylate is a general term used for acrylates and methacrylates.

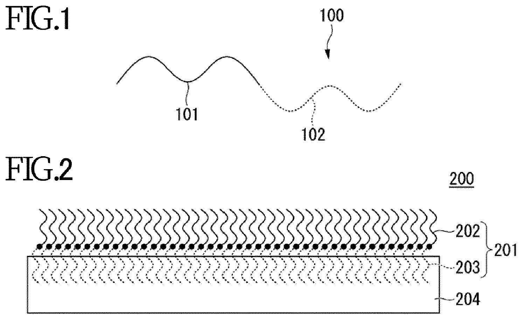

The dimensional ratio in Figs. 1 and 2 is not to scale for convenience of explanation.

[Coating agent for modifying a heat sealable substrate]

[First Embodiment]

The coating agent for modifying a heat sealable substrate according to an embodiment of the present invention (which may also be termed the present coating agent hereinafter, or may simply be termed coating agent for modifying a substrate) is applied to heat sealing surfaces of heat sealable substrates. The present coating agent contains a block copolymer and a liquid medium.

As necessary, the present coating agent may further contain a curing agent.

As necessary, the present coating agent may further contain components other than the block copolymer, the liquid medium, and the curing agent.

(Block copolymer)

The block copolymer of the present embodiment contains a block (A) and a block (B). The block copolymer is a copolymer that can form a lamellar microphase separation structure (also termed lamellar structure hereinafter). The block copolymer may further contain blocks other than the block (A) and the block (B), within a range not impairing the advantageous effects of the present invention.

The block (A) forms a non-adsorptive layer. The block (B) forms a layer that can be adhered to or fused to a heat sealable substrate (also termed adhesive/fusible layer hereinafter). Therefore, the lamellar structure formed of the block copolymer includes a non-adsorptive layer and an adhesive/fusible layer. Details of these blocks will be described later.

In general, if block copolymers, in which two or more types of blocks having low compatibility with each other are bonded at their ends, are heated to their phase transition temperatures or higher, they form periodic microphase separation structures due to self-organization. In such a microphase separation structure, the blocks in the block copolymer form microregions without being mixed with each other.

As microphase separation structures formed due to self-organization of block copolymers, there are known a spherical structure, cylindrical structure (also called columnar structure), gyroidal structure, lamellar structure (also called tabular structure), and the like. The type of the microphase separation structure to be formed depends on the Flory-Huggins interaction parameter $\chi$ that is defined between the blocks forming the block copolymer, the polymerization degree N of the block copolymer, and the phase diagram expressed by the volume fractions of the blocks. Furthermore, the dimensions of the microregions depend on the polymer chain lengths (i.e., molecular weights of the polymer chains) of the blocks.

The expression "have low compatibility with each other" refers to that the formula $\chi \times N > 10.5$ is satisfied (see "Theory of Microphase Separation in Block Copolymers" by L. Leibler, Macromolecules (1980), Vol. 13, pp. 1602-1617). Herein, $\chi$ represents the Flory Huggins interaction parameter defined between different types of blocks, and N represents a polymerization degree of the block copolymer.

The blocks (A) and (B) have low compatibility with each other. When they are heated to their phase transition temperatures or higher, they separate from each other and form a microphase separation structure due to the self-organization phenomenon without being mixed with each other. Furthermore, since the block (A) has low affinity for a heat sealable substrate compared to the block (B), the block (A) is densely oriented at the air interface (at the interface with the contents of the packaging material, when the present coating agent is applied to the heat sealable substrate for use as the packaging material) during formation of a microphase separation structure to thereby form a non-adsorptive layer. Necessarily, the block (B) is oriented at the interface with the heat sealable substrate to form an adhesive/fusible layer. Accordingly, by applying the present coating agent to the heat sealing surface and heat-treating the applied coating agent (also termed annealing), a coating layer can be formed, including a lamellar structure, in which two different functional layers (a non-adsorptive layer and an adhesive/fusible layer) are laminated.

The block copolymer may contain one or more blocks (A). The block copolymer may contain one or more blocks (B).

The bonding form of the blocks forming the block copolymer only needs to be able to form a lamellar structure. For example, the bonding form may be a form in which two or more blocks are bonded in series (also termed linear block copolymer), a form in which three or more blocks are bonded at one point (also termed star-shaped block copolymer), or the like.

Fig. 1 shows an example of the block copolymer. This example shows a block copolymer 100 as a diblock copolymer in which one block (A) 101 and one polymer (B) 102 are bonded at their ends.

During heat sealing, the block (B) forming the adhesive/fusible layer entangles with the thermoplastic resin forming the heat sealable substrate to maintain high heat sealing strength. The fewer the number of layers forming the lamellar structure is, the more easily the block (B) entangles with the thermoplastic resin.

Accordingly, the block copolymer is preferred to have a fewer number of blocks and, in particular, two blocks are preferred. In other words, a diblock copolymer is particularly preferred as the block copolymer.

If the block copolymer is a diblock copolymer, the volume fraction of the block (A) is preferred to be 0.35 or more and 0.65 or less, more preferred to be 0.40 or more and 0.60 or less, and even more preferred to be 0.45 or more and 0.60 or less.

The microphase separation structure formed of a diblock copolymer depends on the volume fractions of the two blocks in the diblock copolymer, and accordingly differences in volume fraction lead to forming different microphase separation structures. If the volume fraction of the block (A) is 0.35 or more and 0.65 or less, a lamellar structure can be easily formed. If the volume fraction of the block (A) is less than 0.35 or more than 0.65, a spherical or cylindrical microphase separation structure can be easily formed.

The volume fraction of the block (A) refers to a fraction of the volume of the block (A) with respect to the total volume of all the blocks forming the block copolymer.

The volume fraction of the block (A) is calculated from the Mw and the densities of the blocks forming the block copolymer. The density of a block is calculated from the mole fraction of the monomer forming the block and the density of the homopolymer. As densities of homopolymers, literature values (e.g., values described in the polymer database PolyInfo) may be used.

The Mw of the block copolymer is preferred to be 1,000 or more, more preferred to be 1,000 or more and less than 1,000,000, even more preferred to be 5,000 or more and 500,000 or less, and most preferred to be 10,000 or more and 100,000 or less.

If the Mw of the block copolymer is 1,000 or more, a continuous lamellar structure can be easily formed and non-adsorptivity can be further improved. Furthermore, the present coating agent has good coating suitability.

On the other hand, in self-organization of the block copolymer, the block copolymer will have high fluidity when being heat-treated at the phase transition temperature or higher, thereby inducing a microphase separation structure, but the fluidity will decrease as the molecular weight of the block copolymer increases. If the Mw of the block copolymer is less than 1,000,000, the rate of self-organization may become higher and high productivity can be achieved.

<Block (A)>

The block (A) is a block forming a non-adsorptive layer.

When the present coating agent is applied to the heat sealing surface, the block copolymer containing the block (A) can impart non-adsorptivity thereto.

A description will be given of the case where the block (A) is a first block (A1) in the present embodiment. The first block (A1) is formed of a copolymer having nitrile group-containing (meth)acrylic monomer units and alkyl group-containing (meth)acrylic monomer units.

The nitrile group-containing (meth)acrylic monomer may be, for example, an acrylonitrile or methacrylonitrile. These monomers may be used singly or in combination of two or more.

The alkyl group of the alkyl group-containing (meth)acrylic monomer may have a linear or branched chain. The number of carbons in the alkyl group is preferred to be 1 or more and 18 or less, and more preferred to be 4 or more and 12 or less.

Examples of the alkyl group-containing (meth)acrylic monomer include alkyl (meth)acrylates such as methyl (meth)acrylate, ethyl (meth)acrylate, butyl (meth)acrylate, hexyl (meth)acrylate, octyl (meth)acrylate, isononyl (meth)acrylate, dodecyl (meth)acrylate, hexadecyl (meth)acrylate, stearyl (meth)acrylate, and docosyl (meth)acrylate. These monomers may be used singly or in combination of two or more.

The first block (A1) may contain monomer units other than the nitrile group-containing (meth)acrylic monomer units and the alkyl group-containing (meth)acrylic monomer units, within a range not impairing non-adsorptivity.

The other monomers may be, for example, polar functional group-containing (meth)acrylic monomers, polar functional group-containing vinyl monomers, ethylene, propylene, or the like. The polar functional group may be, for example, a hydroxy group, carboxy group, or the like.

In the block (A1), the proportion of the alkyl group-containing (meth)acrylic monomer units is preferred to be 0.1 mol or more and 0.8 mol or less, and more preferred to be 0.2 mol or more and 0.5 mol or less, with respect to 1 mol of the nitrile group-containing (meth)acrylic monomer units. If the proportion of the alkyl group-containing (meth)acrylic monomer units is equal to or more than the above lower limit, the block copolymer will have high solubility in the liquid medium, the present coating agent will have high coating suitability, and the heat sealing surface to which the present coating agent has been applied will have high non-adsorptivity and high heat sealability. If the proportion of the alkyl group-containing (meth)acrylic monomer units is equal to or less than the above upper limit, the heat sealing surface to which the present coating agent has been applied will have high non-adsorptivity.

The total proportion of the nitrile group-containing (meth)acrylic monomer units and the alkyl group-containing (meth)acrylic monomer units is preferred to be 50 mol% or more, more preferred to be 80 mol% or more, and even more preferred to be 100 mol%, with respect to 100 mol% of all the monomer units forming the block (A1).

<Block (B)>

The block (B) is a block forming an adhesive/fusible layer.

The block copolymer having the block (B) can secure good heat sealability even when the present coating agent is applied to the heat sealing surface.

The polymer forming the block (B) is selected so that, in the combination with the block (A), the blocks (A) and (B) will have "low compatibility with each other" as described above and thus that a microphase separation structure can be formed.

A description will be given of the case where the block (B) is a block (B1) in the present embodiment. Examples of the polymer forming the block (B1) may include polymers having nitrile group-containing (meth)acrylic monomer units, copolymers having reactive functional group-containing (meth)acrylic monomer units and nitrile group-containing (meth)acrylic monomer units, polymers having (meth)acrylic monomer units containing a side group that can be adhered to or fused to a heat sealable substrate, polymers having functional group-containing vinyl monomer units, and polymers having cyclic olefin units. Of these materials, the polymers having functional group-containing vinyl monomer units, or the polymers having cyclic olefin units are preferred, from the perspective of compatibility with the block (A1).

The nitrile group-containing (meth)acrylic monomer may be, for example, an acrylonitrile or methacrylonitrile. These monomers may be used singly or in combination of two or more.

The polymers having nitrile group-containing (meth)acrylic monomer units may further contain other monomer units.

The polymer having nitrile group-containing (meth)acrylic monomer units may be, for example, polyacrylonitrile or polymethacrylonitrile.

The reactive functional group of the reactive functional group-containing (meth)acrylic monomer is a functional group which can react with the reactive functional group on the heat sealing surface of the heat sealable substrate, or other reactive functional groups in the present coating agent (e.g., the reactive functional group of another reactive functional group-containing (meth)acrylic monomer, or the reactive functional group of a curing agent in the case where the present coating agent contains the curing agent). The reactive functional group may be, for example, at least one selected from the group consisting of hydroxy groups, carboxy groups, epoxy groups, and amino groups.

Examples of the reactive functional group-containing (meth)acrylic monomer may include hydroxy group-containing (meth)acrylic monomers such as 2-hydroxyethyl (meth)acrylate and hydroxypropyl (meth)acrylate; carboxy group-containing (meth)acrylic monomers such as (meth)acrylic acid, maleic acid, and itaconic acid; epoxy group-containing (meth)acrylic monomers such as glycidyl (meth)acrylate; and amino group-containing (meth)acrylic monomers such as 2-(dimethylamino) ethyl methacrylate. These monomers may be used singly or in combination of two or more.

The copolymer having the reactive functional group-containing (meth)acrylic monomer units and the nitrile group-containing (meth)acrylic monomer units may further contain other monomer units.

The side group contained in the (meth)acrylic monomer, which can be adhered to or fused to the heat sealable substrate (also termed adhesive/fusible side group) may be, for example, a long chain alkyl group. The number of carbons in the long chain alkyl group is preferred to be 4 or more, and more preferred to be 4 or more and 18 or less. The long chain alkyl group may be a linear or branched chain alkyl group.

Examples of the adhesive/fusible side group-containing (meth)acrylic monomer may include long chain alkyl (meth)acrylates such as hexyl (meth)acrylate, octyl (meth)acrylate, dodecyl (meth)acrylate, stearyl (meth)acrylate, and docosyl (meth)acrylate. These monomers may be used singly or in combination of two or more.

The polymer having an adhesive/fusible side group-containing (meth)acrylic monomer may further contain other monomer units.

The functional group of the functional group-containing vinyl monomer may be, for example, a hydroxy group, acyl group (acetyl group, etc.), isocyanate group, or the like.

The functional group-containing vinyl monomer may be, for example, a vinyl alcohol or vinyl acetate.

The polymer having functional group-containing vinyl monomer units may further contain other monomer units. The other monomers may include, for example, olefins such as ethylene and propylene.

Examples of the functional group-containing vinyl monomer units may include polyvinyl alcohols, ethylene-vinyl alcohol copolymers, polyvinyl acetates, and ethylene-vinyl acetate copolymers.

The cyclic olefin may be a monocyclic or polycyclic olefin. The number of carbons in the cyclic framework of the cyclic olefin may be, for example, 4 or more and 8 or less. The cyclic olefin may have a substituent group such as an alkyl group.

Examples of the cyclic olefin may include norbornene, tetracyclododecene, methyltetracyclododecene, dimethylcyclotetradodecene, dimethanooctahydronaphthalene, cyclobutene, cyclopentene, and cyclooctene. These cyclic olefins may be used singly or in combination of two or more.

The polymer having cyclic olefin units may further contain other monomer units. Examples of the other monomers may include olefins such as ethylene and propylene; and cyclic unsaturated hydrocarbons other than the cyclic olefins, such as dicyclopentadiene, dihydrodicyclopentadiene, methyldicyclopentadiene, dimethyldicyclopentadiene, tricyclopentadiene, tetracyclopentadiene, and cyclooctadiene.

The block (B 1) may be formed of polymers other than those mentioned above.

Examples of the other polymers may include (co)polymers of a short chain alkyl group-containing (meth)acrylate having 1 or more and 3 or less carbons; (co)polymers of aromatic vinyl-based monomers such as styrene and vinyltoluene; (co)polymers of acrylamide-based monomers such as acrylamide, N-methylolacrylamide, and diacetoneacrylamide; and polymers having an adhesive functional group such as a catechol group at the end or at the side chain.

The polymer forming the block (B 1) is preferred to be a polymer that is of the same type as the thermoplastic resin forming the heat sealable substrate, from the perspective of ease of adhesion or fusion to the heat sealable substrate. The expression "the same type" refers to having a similar main-chain structure or a similar side-chain structure. As examples of "the same type", the following cases may be mentioned.

The case where the thermoplastic resin of the heat sealable substrate is an ethylene-vinyl acetate copolymer, and the block (B1) is a polymer having vinyl acetate units (polyvinyl acetate, etc.).

The case where the thermoplastic resin of the heat sealable substrate is a cyclic olefin copolymer, and the block (B 1) is a polymer having cyclic olefin units.

<Method of preparing block copolymer>

The block copolymer can be prepared using known methods such as living radical polymerization, living anionic polymerization, or living cationic polymerization.

For example, the block copolymer can be prepared according to the synthesis example of Example 2 and the like described in JP 2006-299278 A.

(Liquid medium)

The liquid medium may only need to be able to dissolve the block copolymer. If the present coating agent contains a curing agent, it is preferred that the liquid medium can dissolve the block copolymer and the curing agent.

The liquid medium may be, for example, a ketone solvent, ester solvent, glycol solvent, or hydrocarbon solvent. The ketone solvent may be acetone, methyl ethyl ketone, methyl isobutyl ketone, anone, or the like. The ester solvent may be ethyl acetate, n-propyl acetate, n-butyl acetate, isobutyl acetate, or the like. The glycol solvent may be butyl cellosolve, propylene glycol monomethyl ether, propylene glycol-1-monomethyl ether-2-acetate, or the like. The hydrocarbon solvent may be toluene, xylene, n-hexane, methylcyclohexane, or the like. These liquid media may be used singly or in combination of two or more, and can be suitably selected according to the solubility of the block copolymer.

The liquid medium is preferred to be a ketone solvent, ester solvent, or hydrocarbon solvent.

The liquid medium may be referred to as a dispersion medium.

The boiling point of the liquid medium is preferred to be 120°C or less, and more preferred to be 100°C or less, from the perspective of reducing processing load during coating.

The lower limit of the boiling point of the liquid medium is not particularly limited but may be, for example, 40°C.

The liquid medium having a boiling point of 120°C or less may be, for example, methyl ethyl ketone or methyl isobutyl ketone.

(Curing agent)

The curing agent is used for crosslinking and curing the block copolymer in the case where the block copolymer has a reactive functional group (e.g., in the case where the first block (A1) or (B 1) has reactive functional group-containing (meth)acrylic monomer units). Crosslinkage of the block copolymer in which a microphase separation structure is formed can increase the density of the coating layer and can enhance non-adsorptivity.

In the case where the reactive functional group of the block copolymer is a hydroxy group, the curing agent is preferred to be a polyisocyanate compound having two or more isocyanate groups. Examples of the polyisocyanate compound include diisocyanate compounds, including aromatic diisocyanates such as tolylene diisocyanate and 4,4'-diphenylmethane diisocyanate; aliphatic diisocyanates such as xylylene diisocyanate and hexamethylene diisocyanate; alicyclic diisocyanates such as isophorone diisocyanate; and polymers, derivatives, and mixtures of these diisocyanate compounds. These curing agents may be used singly or in combination of two or more.

The content of the curing agent can be suitably selected according to the content of the reactive functional group of the block copolymer.

The molar ratio as expressed by "reactive functional group of curing agent / reactive functional group of block copolymer" is preferred to be 0.5 or more and 5.0 or less, and more preferred to be 0.8 or more and 3.5 or less. If the molar ratio is 0.5 or more, the block copolymer can be sufficiently cured, and if it is 5.0 or less, blocking can be prevented from occurring on the surface of the coating layer.

(Other components)

Other components may be an antiblocking agent, UV absorber, antistatic agent, antioxidizing agent, antibacterial agent, pigment, dye, antifoam agent, leveling agent, and the like. These components per type may be used singly or in combination of two or more.

(Solid content concentration)

The solid content concentration of the present coating agent is preferred to be 0.1 mass% or more and 20 mass% or less, and more preferred to be 1 mass% or more and 10 mass% or less. If the solid content concentration is 0.1 mass% or more, the block copolymer as a main resin of the present coating agent can be uniformly applied without unevenness and thus a continuous film can be easily obtained. If the solid content concentration is 20 mass% or less, the block copolymer and the like can be sufficiently dissolved. Furthermore, a thin film can be easily formed and thus the microphase separation structure formed by self-organization is less likely to be disturbed and will have good non-adsorptivity, and further, sufficient heat sealing strength can be easily obtained. It should be noted that the expression solid content concentration refers to the ratio of the solid content to the total amount of the present coating agent.

The present coating agent can be produced by mixing a block copolymer, liquid medium, and, as necessary, curing agent and other components.

Since the present coating agent described above contains a specific block copolymer, good non-adsorptivity can be imparted to the heat sealing surface of the heat sealable substrate when it is applied thereto, and good heat sealability can be imparted thereto after impartment of non-adsorptivity.

As described above, by applying the present coating agent to the heat sealing surface, followed by heat treatment (also termed annealing), the self-organization phenomenon can be caused to the surface to thereby form a coating layer having a lamellar structure in which two different functional layers (a non-adsorptive layer and an adhesive/fusible layer) are laminated.

In the lamellar structure, the non-adsorptive layer is formed without defects on the overall air interface above the heat sealable substrate to exhibit good non-adsorptivity. Furthermore, since the adhesive/fusible layer is formed on the overall interface with the heat sealable substrate, good adhesion can be achieved between the coating layer and the heat sealable substrate and accordingly defects, such as separation, are unlikely to occur.

When the laminate including the coating layer is heat-sealed to the heat sealing surface of the heat sealable substrate, the block (B) fluidizes and entangles with the thermoplastic resin forming the heat sealable substrate, and becomes mixed. With this mixing, the block (A) chemically bonded to the block (B) is also mixed with the thermoplastic resin. Therefore, heat sealing inhibition by the block (A) is mitigated, and high heat sealing strength is maintained even in the portion where the coating layer is formed.

Referring to Fig. 2, formation of the lamellar structure will be described more in detail.

A laminate 200 includes a heat sealable substrate 204, and a coating layer 201 formed on the heat sealing surface of the heat sealable substrate 204. The coating layer 201 is formed using a coating agent that contains a block copolymer similar to the block copolymer 100 shown in Fig. 1. The coating layer 201 has a lamellar structure in which an adhesive/fusible layer 203 formed of the block (B) and a non-adsorptive layer 202 formed of the block (A) of the block copolymer are laminated in this order from the heat sealable substrate 204 side. During heat sealing of the laminate 200, the block (B) of the adhesive/fusible layer 203 fluidizes and entangles with part of the thermoplastic resin of the heat sealable substrate 204 for mixing, while the block (A) of the non-absorption layer 202 also mixes with the thermoplastic resin of the heat sealable substrate 204, so that these layers are fused. Thus, a layer formed of fused substances of the block copolymer and the thermoplastic resin is formed, in which the non-adsorptive layer 202, the adhesive/fusible layer 203, and part of the heat sealable substrate are integrated. As a result, it is considered that, in the heat-sealed portion, the block (A) has a low density at the outermost surface of the laminate 200, without exhibiting non-adsorptivity, and high heat sealing strength is achieved.

On the other hand, it is considered that, if there is no block (B) in the block copolymer, the block (A) is less likely to mix with the thermoplastic resin of the heat sealable substrate 204 during heat sealing, and heat sealing strength is reduced.

It should be noted that the laminated film in which two different functional layers are sequentially laminated can also be formed using a multilayer extrusion method in which different types of resins are simultaneously extruded onto a substrate. However, in the multilayer extrusion method, it is difficult to form a thin multilayer film having a thickness of a few micrometers or less, and to form two different functional layers in the state of being chemically bonded.

According to the present coating agent utilizing the self-organization phenomenon, it is possible to form a laminated film in which two different functional layers are chemically bonded using only one coating and heat treatment.

Also, since the present coating agent contains the first block (A1) having 0.1 mol or more of the alkyl group-containing (meth)acrylic monomer units with respect to 1 mol of the nitrile group-containing (meth)acrylic monomer units, the block copolymer sufficiently dissolves into a low-boiling solvent such as methyl ethyl ketone or methyl isobutyl ketone. Therefore, such a low-boiling solvent can be used as a liquid medium to reduce the processing load during coating.

[Second Embodiment]

A coating agent for modifying a heat sealable substrate according to a second embodiment is applied to a heat sealing surface of a heat sealable substrate and contains a block copolymer and a liquid medium. The block copolymer contains a second block (A2) forming a non-adsorptive layer and a block (B2) forming a layer that can be adhered to or fused to the heat sealable substrate, with the second block (A2) having a volume fraction of 0.35 or more and 0.65 or less.

The present embodiment is different from the first embodiment in that the second block (A2) is used as the block (A), and the block (B2) is used as the block (B). For the configuration other than this, the description of the first embodiment can be applied to the present embodiment unless otherwise described.

The coating agent for modifying a heat sealable substrate of the present embodiment can impart non-adsorptivity to a sealant film and can balance heat sealability with non-adsorptivity. The coating agent for modifying a heat sealable substrate contains a block copolymer composed of two or more polymer blocks, and a dispersion medium. In other words, the coating agent for modifying a heat sealable substrate according to the present embodiment is applied to a heat sealing surface of a heat sealable substrate and contains a block copolymer and a liquid medium. The block copolymer contains a second block (A2) forming a non-adsorptive layer and a block (B2) forming a layer that can be adhered to or fused to the heat sealable substrate. As schematically shown in Fig. 1, the polymer blocks forming a block copolymer 100 include a polymer block 101 having non-adsorptivity, and a polymer block 102 that can be adhered to or fused to a sealant film.

The block copolymer used for the coating agent of the present embodiment is a polymer in which two or more different polymer blocks having low compatibility with each other are bonded at their ends. In other words, the block copolymer is a polymer in which two or more blocks, i.e., the second block (A2) and the block (B2), different from each other and having low compatibility with each other are bonded at their ends.

Such a block copolymer forms a periodic microphase separation structure in a self-organization manner by being heated to its phase transition temperature or higher, i.e., annealed. In the microphase separation structure, the blocks (A2) and (B2), which are polymer blocks having low compatibility with each other, form microregions so as not to mix with each other.

The dimensions of the microregions depend on the polymer chain lengths of the polymer blocks. Furthermore, the microphase separation structure to be formed is determined by the volume fractions of the polymer blocks forming the block copolymer. The microphase separation structure is as described in the first embodiment.

In the present embodiment, use of the self-organization phenomenon described above can form a coating layer in which two different functional layers (i.e., a non-adsorptive layer and a layer that can be adhered to or fused to a thermoplastic resin substrate) are laminated. The coating agent of the present embodiment can form a laminated film, in which two different functional layers are chemically bonded, through only one application and annealing treatment of the coating agent, and thus is preferred to the multilayer extrusion method mentioned above.

The block copolymer may include one or more blocks (A2). The block copolymer may include one or more blocks (B2).

The block copolymer may be, for example, a linear block copolymer in which two or more polymer blocks, i.e., the second block (A2) and the block (B2), are bonded in series at their ends, a star-shaped block copolymer in which three or more polymer blocks are bonded at one point, or the like.

Either of the block copolymers can be used in the present embodiment, but it is preferred to use the diblock copolymer in which two different polymer blocks, i.e., the second block (A2) and the block (B2), are bonded at their ends.

The polymer block forming the non-adsorptive layer of the block copolymer that can be used in the present embodiment (termed second block (A2) hereinafter) may be a nitrile group-containing (meth)acrylic polymer, a copolymer obtained by copolymerizing reactive functional group-containing (meth)acrylic monomer units, which can react with a curing agent, with nitrile group-containing (meth)acrylic monomer units, a functional group-containing vinyl polymer, a cyclic olefin copolymer, or the like.

The nitrile group-containing (meth)acrylic monomer may be, for example, an acrylonitrile or methacrylonitrile. These monomers may be used singly or in combination of two or more.

The polymer having nitrile group-containing (meth)acrylic monomer units may further contain other monomer units.

The nitrile group-containing (meth)acrylic polymer may be, specifically, polyacrylonitrile, polymethacrylonitrile, or the like.

The copolymer obtained by copolymerizing reactive functional group-containing (meth)acrylic monomer units, which can react with a curing agent, with nitrile group-containing (meth)acrylic monomer units may be copolymers containing a hydroxy group-containing (meth)acrylic monomer, carboxy group-containing (meth)acrylic monomer, epoxy group-containing (meth)acrylic monomer, amino group-containing (meth)acrylic monomer, or the like. Examples of the reactive functional group-containing (meth)acrylic monomer may include hydroxy group-containing (meth)acrylic monomers such as 2-hydroxyethyl(meth)acrylate and hydroxypropyl(meth)acrylate; amino group-containing (meth)acrylic monomers such as 2-(dimethylamino)ethylmethacrylate; carboxy group-containing (meth)acrylic monomers such as (meth)acrylic acid, maleic acid, and itaconic acid; and epoxy group-containing (meth)acrylic monomers such as glycidyl(meth)acrylate. These monomers may be used singly or in combination of two or more.

The functional group of the functional group-containing vinyl monomer in the functional group-containing vinyl polymer may be, for example, a hydroxy group, acyl group (acetyl group, etc.), isocyanate group, or the like.

The functional group-containing vinyl monomer may be, for example, a vinyl alcohol or vinyl acetate.

The polymer having functional group-containing vinyl monomer units may further contain other monomer units. The other monomers may be, for example, olefins such as ethylene and propylene.

The functional group-containing vinyl polymer may be a polyvinyl alcohol, polyvinyl acetate, ethylene-vinyl acetate copolymer, ethylene-vinyl alcohol copolymer, or the like.

The cyclic olefin may be a monocyclic or polycyclic olefin. The number of carbons in the cyclic framework of the cyclic olefin may be, for example, 4 or more and 8 or less. The cyclic olefin may have a substituent group such as an alkyl group.

Examples of the cyclic olefin may include norbornene, tetracyclododecene, methyltetracyclododecene, dimethylcyclotetradodecene, dimethanooctahydronaphthalene, cyclobutene, cyclopentene, and cyclooctene. These cyclic olefins may be used singly or in combination of two or more.

The polymer having cyclic olefin units may further contain other monomer units. Examples of the other monomers may include olefins such as ethylene and propylene; and cyclic unsaturated hydrocarbons other than the cyclic olefins, such as dicyclopentadiene, dihydrodicyclopentadiene, methyldicyclopentadiene, dimethyldicyclopentadiene, tricyclopentadiene, tetracyclopentadiene, and cyclooctadiene.

Examples of the other polymers may include (co)polymers of short chain alkyl group-containing (meth)acrylates having 1 or more and 3 or less carbons; (co)polymers of aromatic vinyl-based monomers such as styrene and vinyltoluene; (co)polymers of acrylamide-based monomers such as acrylamide, N-methylolacrylamide, and diacetoneacrylamide; and polymers having an adhesive functional group such as a catechol group at the end or side chain.

On the other hand, the polymer block forming the layer that can be adhered to or fused to the thermoplastic resin substrate of the block copolymer (termed block (B2) hereinafter) may be a nitrile group-containing (meth)acrylic polymer (also termed polymer having nitrile group-containing (meth)acrylic monomer units), copolymer obtained by copolymerizing reactive functional group-containing (meth)acrylic monomer units, which can react with a curing agent or the reactive functional group on the surface of the substrate, with nitrile group-containing (meth)acrylic monomer units, (meth)acrylic polymer containing a side chain that can be adhered to or fused to the thermoplastic resin substrate or a copolymer thereof, functional group-containing vinyl polymer (also termed polymer having functional group-containing vinyl monomer units), cyclic olefin polymer (also termed polymer having cyclic olefin units), or the like. However, for the block (B2), a polymer different from that of the second block (A2) is selected from the above polymers.

The nitrile group-containing (meth)acrylic monomer may be, for example, an acrylonitrile or methacrylonitrile. These monomers may be used singly or in combination of two or more.

The polymer having nitrile group-containing (meth)acrylic monomer units may further contain other monomer units.

The nitrile group-containing (meth)acrylic polymer may be, specifically, polyacrylonitrile, polymethacrylonitrile, or the like.

The copolymer obtained by copolymerizing reactive functional group-containing (meth)acrylic monomer units, which can react with a curing agent or the reactive functional group on the substrate surface, with nitrile group-containing (meth)acrylic monomer units may be a copolymer containing a hydroxy group-containing (meth)acrylic monomer, carboxy group-containing (meth)acrylic monomer, epoxy group-containing (meth)acrylic monomer, amino group-containing (meth)acrylic monomer, or the like.

Specifically, the reactive functional group-containing (meth)acrylic monomer may be hydroxy group-containing (meth)acrylic monomers such as 2-hydroxyethyl(meth)acrylate and hydroxypropyl(meth)acrylate; carboxy group-containing (meth)acrylic monomers such as (meth)acrylic acid, maleic acid, and itaconic acid; epoxy group-containing (meth)acrylic monomers such as glycidyl(meth)acrylate; amino group-containing (meth)acrylic monomers such as 2-(dimethylamino)ethylmethacrylate; and the like.

The (meth)acrylic polymer containing a side chain (also termed side group) that can be adhered to or fused to the thermoplastic resin substrate (i.e., heat sealable substrate) may be a (meth)acrylic monomer or copolymer having a branched or linear long chain alkyl group. The number of carbons in the long chain alkyl group is preferred to be 4 or more, and more preferred to be 4 or more and 18 or less. Specifically, the adhesive/fusible side group-containing (meth)acrylic monomer may be hexyl (meth)acrylate, octyl (meth)acrylate, dodecyl (meth)acrylate, stearyl (meth)acrylate, docosyl (meth)acrylate, or the like. These monomers may be used singly or in combination of two or more.

The polymer having a (meth)acrylic monomer that contains an adhesive/fusible side group may further contain other monomer units.

The functional group of the functional group-containing vinyl monomer may be, for example, a hydroxy group, acyl group (acetyl group, etc.), isocyanate group, or the like.

The functional group-containing vinyl monomer may be, for example, a vinyl alcohol or vinyl acetate.

The polymer having functional group-containing vinyl monomer units may further contain other monomer units. The other monomers may be, for example, olefins such as ethylene and propylene.

The functional group-containing vinyl polymer may be a polyvinyl alcohol, polyvinyl acetate, ethylene-vinyl acetate copolymer, ethylene-vinyl alcohol copolymer, or the like.

The cyclic olefin may be a monocyclic or polycyclic olefin. The number of carbons in the cyclic framework of the cyclic olefin may be, for example, 4 or more and 8 or less. The cyclic olefin may have a substituent group such as an alkyl group.

Examples of the cyclic olefin may include norbornene, tetracyclododecene, methyltetracyclododecene, dimethylcyclotetradodecene, dimethanooctahydronaphthalene, cyclobutene, cyclopentene, and cyclooctene. These cyclic olefins may be used singly or in combination of two or more.

The polymer having cyclic olefin units may further contain other monomer units. Examples of the other monomers may include olefins such as ethylene and propylene; and cyclic unsaturated hydrocarbons other than the cyclic olefins, such as dicyclopentadiene, dihydrodicyclopentadiene, methyldicyclopentadiene, dimethyldicyclopentadiene, tricyclopentadiene, tetracyclopentadiene, and cyclooctadiene.

The block (B2) may be formed of polymers other than those mentioned above.

Examples of the other polymers may include (co)polymers of linear alkyl group-containing (meth)acrylates; (co)polymers of aromatic vinyl-based monomers such as styrene and vinyltoluene; (co)polymers of acrylamide-based monomers such as acrylamide, N-methylolacrylamide, and diacetoneacrylamide; and polymers having an adhesive functional group such as a catechol group at the end or side chain.

It should be noted that the polymer blocks, that is, the second block (A2) and the block (B2), in the block copolymer are required to be selected as a combination of polymers which have low compatibility with each other and can form the microphase separation structure described above. Furthermore, for the block (B2) serving as a polymer block of the fusible layer, it is more preferred to select a polymer that is the same type as (has a similar main-chain structure or a similar side-chain structure to) the thermoplastic resin material of the substrate used. The expression "the same type" is as stated above.

As in the first embodiment, the diblock copolymer preferred to be used in the present embodiment depends on the volume fractions of the two polymer blocks, and the difference in volume fraction produces different fine structures (also termed microphase separation structures).

In the present embodiment, as in the first embodiment, a diblock copolymer that can form a lamellar structure is preferred. In order to impart non-adsorptivity to the sealant film (i.e., heat sealable substrate), the non-adsorptive layer as a single film is required to be formed on the overall surface of the sealant film with no defects. In the lamellar structure, the lamination structure is oriented in the in-plane direction of the sealant film to form a layer in which the second block (A2) is densely oriented at the interface with the contents (the air interface). Accordingly, the non-adsorptive layer can be formed on the overall surface of the sealant film.

In the case of forming a lamellar structure in which the second block (A2) is oriented at the air interface, the block (B2) that is the other polymer block of the block copolymer is necessarily oriented at the interface with the sealant film to improve adhesion between the coating layer and the sealant film, thereby achieving an advantageous effect that defects, such as separation, are less likely to occur therebetween.

The volume fraction of the second block (A2) of the diblock copolymer is preferred to be 0.35 or more and 0.65 or less, more preferred to be 0.40 or more and 0.65, and even more preferred to be 0.45 or more and 0.64. If the volume fraction of the second block (A2) is 0.35 or more and 0.65 or less, the lamellar structure can be easily formed. If the volume fraction of the second block (A2) is less than 0.35 or 0.65 or more, a spherical or cylindrical structure can be easily formed.

The block copolymer is preferred to have a weight average molecular weight of 1,000 or more and less than 1,000,000. If the Mw of the block copolymer is 1,000 or more, a continuous lamellar structure can be easily formed and non-adsorptivity can be further improved. Furthermore, the present coating agent has good coating suitability.

If the weight average molecular weight is less than 1,000, it may be difficult to form a continuous lamellar structure film and thus non-adsorptive performance may be impaired. Furthermore, as described above, fluidity of the block copolymer will be enhanced in the self-organization by performing annealing (heat treatment) at the phase transition temperature or higher, so that a microphase separation structure will be induced. However, as the molecular weight of the block copolymer increases, the fluidity will decrease, and therefore, in the case of a block copolymer having a high weight average molecular weight of 1,000,000 or more, the rate of self-organization may be lowered and thus productivity may be significantly lowered. If the Mw of the block copolymer is less than 1,000,000, the rate of self-organization may become higher and high productivity can be achieved.

The block copolymer of the present embodiment can be prepared according to the

<Method of preparing block copolymer> described in the first embodiment.

As in the first embodiment, a curing agent may be added to the coating agent of the present embodiment. The curing agent is used for crosslinking and curing the polymer blocks by reaction with the reactive functional group, in the case where a polymer block of the block copolymer has the reactive functional group (e.g., in the case where the second block (A2) or (B2) has reactive functional group-containing (meth)acrylic monomer units). Addition of a curing agent can crosslink the polymer chains in the blocks to increase the density of the layer and improve non-adsorption characteristics for the contents such as active ingredients.

In the case where the second block (A2) or the block (B2) has a hydroxy group-containing (meth)acrylate, the curing agent is preferred to be a polyisocyanate compound having two or more isocyanate groups. Examples of the polyisocyanate compound include aromatic diisocyanates such as tolylene diisocyanate and 4,4'-diphenylmethane diisocyanate; aliphatic diisocyanates such as xylylene diisocyanate and hexamethylene diisocyanate; alicyclic diisocyanates such as isophorone diisocyanate; and polymers, derivatives, and mixtures of these diisocyanate compounds. These curing agents may be used singly or in combination of two or more.

The content of the curing agent can be suitably selected according to the content of the reactive functional group of the block copolymer.

The ratio between the polymer blocks and the curing agent, i.e., the molar ratio as expressed by "reactive functional group of curing agent / reactive functional group of block copolymer", is preferred to be 0.5 or more and 5.0 or less, and more preferred to be 0.8 or more and 3.5 or less. If the molar ratio is 0.5 or more, the block copolymer can be sufficiently cured, and if it is 5.0 or less, blocking can be prevented from occurring on the surface of the non-adsorptive layer, i.e., the coating layer.

The descriptions provided for (Liquid medium), (Other components) and (Solid content concentration) in the first embodiment can be applied to the present embodiment.

[Laminate]

A laminate (also termed the present laminate hereinafter) according to an embodiment of the present invention includes a heat sealable substrate, and a coating layer formed on the heat sealing surface of the heat sealable substrate.

As necessary, the present laminate may further include substrates or layers other than the heat sealable substrate and the coating layer.

(Heat sealable substrate)

The heat sealable substrate is a substrate having heat sealability. The heat sealable substrate may be a resin substrate having heat sealability.

Usually, heat sealable substrates include a thermoplastic resin. The thermoplastic resin is preferred to be a resin that can be processed into a shape by thermal compression or the like, and may be, for example, a polyethylene resin, polypropylene resin, cyclic polyolefin resin, polyester resin, or vinyl acetate resin. These thermoplastic resins per type may be used singly or in combination of two or more.

The thickness of the heat sealable substrate is not particularly limited, but may be, for example, 1 $\mu$m or more and 100 $\mu$m or less.

(Coating layer)

The coating layer is formed of a block copolymer. The coating layer has a lamellar structure. The block copolymer is the same as the block copolymer of the present coating agent.

As described above, the lamellar structure includes a non-adsorptive layer formed of a block (A) and an adhesive/fusible layer formed of a block (B). In the lamellar structure, the layer nearest the air interface is the non-adsorptive layer. In the lamellar structure, the layer nearest the heat sealable substrate is the adhesive/fusible layer.

The number of the non-adsorptive layers of the lamellar structure may be one or more. The number of the adhesive/fusible layers of the lamellar structure may be one or more.

As described above, the fewer the number of layers forming the lamellar structure is, the more easily the block (B) entangles with the thermoplastic resin of the heat sealable substrate.

Accordingly, the lamellar structure is preferred to have a two-layer structure in which one adhesive/fusible layer and one non-adsorptive layer are laminated from the heat sealable substrate side.

If a coating layer is formed using a roll-to-roll method, for example, the thickness of the coating layer is preferred to be around 0.01 $\mu$m or more and 10 $\mu$m or less, and more preferred to be around 0.1 $\mu$m or more and 1 $\mu$m or less.

However, the thickness of the coating layer is not limited to the above range. For example, the thickness of the coating layer can be selected so as to match the Mw of the block copolymer. As described above, fluidization and entanglement of the block (B) and the thermoplastic resin of the heat sealable substrate can mix the block copolymer with the heat sealing resin. Therefore, heat sealing inhibition by the non-adsorption block is mitigated, and high heat sealing strength is maintained even in the portion where the coating layer is formed. In order to maintain high heat sealing strength, the lower the number of layers of the lamellar structure the better. Accordingly, the thickness of the coating layer is preferred to be selected, matching the Mw of the block copolymer, so that orientation can be achieved with a fewer number of layers.

(Other substrates or layers)

For ease of processing the present laminate into a packaging bag or the like, the present laminate may further include a support substrate on a surface of the heat sealable substrate opposite to the coating layer. In other words, the present laminate may further include a support substrate on a surface of the heat sealable substrate facing away from the surface where the coating layer is formed.

The support substrate may have a single-layer structure or a multilayer structure.

As the single-layer support substrate, various plastic films can be used. Examples of the single-layer support substrate may include polyolefin films such as a polyethylene film and polypropylene film; polyester films such as a polyethylene terephthalate film, polybutylene terephthalate film, and polyethylene naphthalate film; polyamide films such as a nylon-6 film and nylon-66 film; and polyimide films.

Of these films, a polypropylene film or a polyethylene terephthalate film is preferred from the perspective of film strength and cost. From the perspective of improving mechanical strength or imparting the packaging bag with durability against piercing or other external forces, a polyamide film is preferred.

If the support substrate has a multilayer structure, one layer of the multilayer structure is preferred to be formed of a plastic film mentioned above. In this case, other layers may be formed of any materials. For example, a plastic film, a coating film, paper, a metal foil, a vapor-deposited layer, or the like. If a metal foil, a vapor-deposited metal film, a vapor-deposited inorganic film, or the like is used, good gas barrier properties can be imparted to the laminate.

As the metal foil, an aluminum foil or copper foil can be used. These metal foils can be laminated to the plastic film using an adhesive.

The present laminate may include a printed layer.

When the laminate is used as a packaging bag or the like, the printed layer may be located at a position recognizable from the outer surface (from the surface facing away from the coating layer). For example, if a transparent substrate is used as the support substrate, the printed layer may be provided between the support substrate and the heat sealable substrate.

The method of printing the printed layer and the printing ink used are suitably selected from known printing methods, considering printing suitability for the films, aesthetic factors such as color hue, adhesion, safety as pharmaceutical or cosmetic containers, and the like. Examples of the printing method may include gravure printing, offset printing, gravure offset printing, flexographic printing, and ink jet printing.

[Method of producing laminate]

The method of producing a laminate according to an embodiment of the present invention (also termed the present production method) includes applying the present coating agent to the heat sealing surface of a heat sealable substrate, and heat-treating the applied coating agent. With this method, a coating layer is formed on the heat sealing surface of the heat sealable substrate.

The coating method may be solution casting, laminate molding, cast molding, injection molding, use of 3D printer, or the like. If the coating layer is formed into a film shape, solution casting is suitable, which specifically may be bar coating, dip coating, spin coating, flow coating, spray coating, roll coating, gravure roll coating, air doctor coating, blade coating, wire doctor coating, knife coating, reverse coating, transfer roll coating, microgravure coating, kiss coating, cast coating, slot orifice coating, calender coating, die coating, or the like.

Heat treatment is performed for the purpose of drying the present coating agent applied to the heat sealing surface (i.e., removing liquid medium), and forming a lamellar structure by promoting self-organization of the block copolymer.

As the heat treatment method, a known drying method can be suitably used, including, for example, heating, blowing, hot blasting, combinations of these methods, or the like.

Self-organization of the block copolymer progresses by heating the block copolymer at its phase transition temperature or higher for impartment of fluidity thereto. Therefore, the heat treatment temperature is selected from the range of the phase transition temperature or higher of the block copolymer used and the melting temperature or less of the heat sealable substrate. The heat treatment time is selected according to the time taken for forming the microphase separation structure.

The phase transition temperature of the block copolymer can be obtained using differential scanning calorimetry (DSC).

In order to progress the self-organization phenomenon, heat treatment may be performed under solvent vapor having affinity for the block copolymer. Such heat treatment may be called a solvent annealing process. Heat treatment under solvent vapor having affinity for the block copolymer can improve fluidity of the block copolymer due to the presence of the solvent vapor, thereby promoting self-organization. This can reduce time and temperature of the heat treatment.

The solvent used in this case is not particularly limited as long as the solvent has affinity for the block copolymer. Examples of the solvent may include chloroform, toluene, tetrahydrofuran, and propylene glycol-1-monomethyl ether-2-acetate (PGMEA).

If heat treatment is performed under solvent vapor, the heat treatment temperature is preferred to be less than the boiling point of the solvent used. If heat treatment is performed at the boiling temperature or more of the solvent, the solvent may be vaporized around the coating film, preventing sufficient permeation of the solvent vapor into the coating film, and thus the effect of improving fluidity of the block copolymer is not necessarily achieved.

[Usage of laminate]

For example, the present laminate can be used as a packaging material.

If the present laminate is used as a packaging material, it may be used in the form of a film, or it may be used after being processed into a shape of a bag or the like by heat sealing.

For example, a packaging bag can be produced by having two sheets of the present laminate overlapped with each other so that the coating layer-side surfaces face each other, and heat-sealing the peripheral edges of the sheets.

The packaging bag, which has been produced so that the coating layers formed of the present coating agent are located inside, has non-adsorptivity in the inner surfaces (surfaces contacting the contents) and has high heat sealing strength, and accordingly, it is suitable for use as a packaging material for liquid contents containing fragrance and active ingredients.

The liquid contents may be liquid pharmaceuticals containing medical ingredients (infusions, pharmaceuticals, or the like used for intravenous drips, or the like), insecticides, liquid cosmetics containing active ingredients (skin toner, emulsion, or the like), liquors containing flavor ingredients, aromatic oils, or the like. The medical ingredients may be terpenes such as methyl salicylate, limonene, citral, 1-menthol, and d1-camphor, aromatic compounds such as salicylic acid and naphthalene, vitamins, or the like.

The present invention includes another aspect as follows.

[17] A coating agent for modifying a heat sealable substrate, the coating agent being applied to a heat sealing surface of a heat sealable substrate, wherein

the coating agent contains a block copolymer that can form a lamellar microphase separation structure, and a liquid medium;

the block copolymer contains a first block (A1) forming a non-adsorptive layer, and a block (B1) forming a layer that can be adhered to or fused to the heat sealable substrate; and

the first block (A1) is formed of a copolymer having nitrile group-containing (meth)acrylic monomer units and alkyl group-containing (meth)acrylic monomer units, the alkyl group-containing (meth)acrylic monomer units being contained in a proportion of 0.11 mol or more and 0.78 mol or less with respect to 1 mol of the nitrile group-containing (meth)acrylic monomer units.

[18] The coating agent for modifying a heat sealable substrate according to [17], wherein the block copolymer has a weight average molecular weight of 10,000 or more and 100,000 or less.

[19] The coating agent for modifying a heat sealable substrate according to [17] or [18], wherein the block copolymer is a diblock copolymer in which the first block (A1) has a volume fraction of 0.45 or more and 0.60 or less.

[20] The coating agent for modifying a heat sealable substrate according to any one of [17] to [19], wherein the block (B 1) is formed of a polymer having nitrile group-containing (meth)acrylic monomer units, a copolymer having reactive functional group-containing (meth)acrylic monomer units and nitrile group-containing (meth)acrylic monomer units, a polymer having (meth)acrylic monomer units containing a side group that can be adhered to or fused to the heat sealable substrate, a polymer having functional group-containing vinyl monomer units, or a polymer having cyclic olefin units.

[21] The coating agent for modifying a heat sealable substrate according to any one of [17] to [20], wherein the number of carbons in an alkyl group of the alkyl group-containing (meth)acrylic monomer units is 4 or more and 12 or less.

[22] A laminate, wherein

the laminate includes a heat sealable substrate, and a coating layer formed on a heat sealing surface of the heat sealable substrate;

the coating layer has a lamellar microphase separation structure formed of a block copolymer;

the block copolymer contains a first block (A1) forming a non-adsorptive layer, and a block (B1) forming a layer that can be adhered to or fused to the heat sealable substrate; and

the first block (A1) is formed of a copolymer having nitrile group-containing (meth)acrylic monomer units and alkyl group-containing (meth)acrylic monomer units, the alkyl group-containing (meth)acrylic monomer units being contained in a proportion of 0.11 mol or more and 0.78 mol or less with respect to 1 mol of the nitrile group-containing (meth)acrylic monomer units.

[23] A method of producing a laminate, including applying the coating agent for modifying a heat sealable substrate according to any one of [17] to [21] to a heat sealing surface of a heat sealable substrate, and heat-treating the applied coating agent.

The present invention includes still another aspect as follows.

[24] A coating agent for modifying a heat sealable substrate, the coating agent being applied to a heat sealing surface of a heat sealable substrate, wherein

the coating agent contains a block copolymer, and a liquid medium;
the block copolymer contains a second block (A2) forming a non-adsorptive layer, and a block (B2) forming a layer that can be adhered to or fused to the heat sealable substrate;
the second block (A2) is any one of a nitrile group-containing (meth)acrylic polymer, a copolymer obtained by copolymerizing reactive functional group-containing (meth)acrylic monomer units, which can react with a curing agent, with nitrile group-containing (meth), a functional group-containing vinyl polymer, and a cyclic olefin polymer; and
the second block (A2) has a volume fraction of 0.45 or more and 0.64 or less.

[25] The coating agent for modifying a substrate according to [24], wherein the block copolymer has a weight average molecular weight of 1,000 or more.
[26] The coating agent for modifying a substrate according to [24] or [25], wherein the block (B2) is a block different from the second block (A2) and is any one of a nitrile group-containing (meth)acrylic polymer, a copolymer obtained by copolymerizing reactive functional group-containing (meth)acrylic monomer units, which can react with a curing agent and a reactive functional group on a substrate surface, with nitrile group-containing (meth)acrylic monomer units, a (meth)acrylic polymer containing a side chain that can be adhered to or fused to a thermoplastic resin substrate or a copolymer thereof, a functional group-containing vinyl polymer, and a cyclic olefin copolymer.
[27] A laminate, wherein

the laminate includes a heat sealable substrate, and a coating layer formed on a heat sealing surface of the heat sealable substrate;
the coating layer has a lamellar microphase separation structure formed of a block copolymer;
the block copolymer contains a second block (A2) forming a non-adsorptive layer, and a block (B2) forming a layer that can be adhered to or fused to the heat sealable substrate;
the second block (A2) is any one of a nitrile group-containing (meth)acrylic polymer, a copolymer obtained by copolymerizing reactive functional group-containing (meth)acrylic monomer units, which can react with a curing agent, with nitrile group-containing (meth), a functional group-containing vinyl polymer, and a cyclic olefin polymer; and
the second block (A2) has a volume fraction of 0.45 or more and 0.64 or less.

[28] A method of producing a laminate, including applying the coating agent for modifying a heat sealable substrate according to any of [24] to [26] to a heat sealing surface of a heat sealable substrate, and heat-treating the applied coating agent.

[Examples]

In the following, the details of the present invention will be more specifically described based on examples. However, the present invention is not limited only to the examples shown herein.
The abbreviations used in the examples are shown below.

PET: Polyethylene terephthalate
COC: Cyclic olefin copolymer
LLDPE: Linear low density polyethylene
MEK: Methyl ethyl ketone
PGMEA: Propylene glycol-1-monomethyl ether-2-acetate
EVA: Ethylene-vinyl acetate copolymer
AN: Acrylonitrile
BA: Butyl acrylate
OA: Octyl acrylate

PAN: Polyacrylonitrile
PDMA: Poly dodecyl methacrylate
PVAc: Polyvinyl acetate
P(AN-rand-BA): Poly(acrylonitrile-rand-butyl acrylate)
P(AN-rand-OA): Poly(acrylonitrile-rand-octyl acrylate)
(P(MMA-HEMA-AN)): Poly(methacrylic acid 2-hydroxyethyl-methyl methacrylate-acrylonitrile)
COC: Cyclic olefin copolymer
COP: Cyclic olefin polymer
P1-b-P2 (where P1 and P2 each represent any polymer) represents a block copolymer in which a block formed of P1 and a block formed of P2 are bonded to each other. For example, PVAc-b-P(AN-rand-BA) represents a block copolymer in which a block formed of PVAc and a block formed of P(AN-rand-BA) are bonded to each other.
P(m1-rand-m2) (where m1 and m2 each represents any monomer) represents a random copolymer of m1 and m2. For example, P(AN-rand-BA) is a random copolymer of AN and BA.

(Example 1A)

EVA (NOVATEC™ EVA manufactured by Mitsubishi Chemical Corporation) was extruded onto a PET film (E5100 with a thickness of 12 μm manufactured by Toyobo Co., Ltd.) to obtain a laminated film (EVA thickness: 30 μm). The EVA surface of the obtained laminated film was corona-treated.

Separately, PVAc-b-P(AN-rand-BA) (Mw of PVAc: 12,500; Mw of P(AN-rand-BA): 11,000; AN/BA molar ratio=1/0.11; and volume fraction of P(AN-rand-BA): 0.48) as a block copolymer was dissolved into MEK to obtain a 5 mass% solution (coating agent).

The 5 mass% solution was applied once to the corona-treated EVA surface of the laminated film using a #6 wire bar, followed by heat treatment at 105°C for 10 minutes to form a coating layer with a thickness of 0.5 μm. Through these processes, there was obtained a laminate in which PET / EVA / coating layer were laminated in this order.

(Example 2A)

A coating layer was formed on a corona-treated EVA surface of a laminated film as in Example 1A, except that PVAc-b-P(AN-rand-BA) (Mw of PVAc: 12,500; Mw of P(AN-rand-BA): 12,000; AN/BA molar ratio=1/0.5; and volume fraction of P(AN-rand-BA): 0.50) was used as a block copolymer.

(Example 3A)

A coating layer was formed on a corona-treated EVA surface of a laminated film as in Example 1A, except that PVAc-b-P(AN-rand-BA) (Mw of PVAc: 12,500; Mw of P(AN-rand-BA): 11,500; AN/BA molar ratio=1/0.8; and volume fraction of P(AN-rand-BA): 0.49) was used as a block copolymer.

(Example 4A)

A coating layer was formed on a corona-treated EVA surface of a laminated film as in Example 1A, except that PVAc-b-P(AN-rand-OA) (Mw of PVAc: 12,500; Mw of P(AN-rand-OA): 10,000; AN/OA molar ratio=1/0.10; and volume fraction of P(AN-rand-OA): 0.48) was used as a block copolymer.

(Example 5A)

A coating layer was formed on a corona-treated EVA surface of a laminated film as in Example 1A, except that PVAc-b-P(AN-rand-OA) (Mw of PVAc: 12,500; Mw of P(AN-rand-OA): 13,000; AN/OA molar ratio=1/0.5; and volume fraction of P(AN-rand-OA): 0.52) was used as a block copolymer.

(Example 6A)

A coating layer was formed on a corona-treated EVA surface of a laminated film as in Example 1A, except that PVAc-b-P(AN-rand-OA) (Mw of PVAc: 12,500; Mw of P(AN-rand-OA): 12,000; AN/OA molar ratio=1/0.78; and volume fraction of P(AN-rand-OA): 0.47) was used as a block copolymer.

(Example 7A)

A PET film (E5100 with a thickness of 12 $\mu$m manufactured by Toyobo Co., Ltd.) and a COC film (Coxec TCS-2 with a thickness of 20 $\mu$m manufactured by Kurabo Industries Ltd.) were bonded together to obtain a laminated film. The COC surface of the obtained laminated film was corona-treated.

Separately, COP-b-P(AN-rand-BA) (Mw of COP: 10,000; Mw of P(AN-rand-BA): 9,900; AN/BA molar ratio=1/0.5; and volume fraction of P(AN-rand-BA): 0.48) as a block copolymer was dissolved into PGMEA to obtain a 1 mass% solution (coating agent).

The 1 mass% solution was applied once to the corona-treated COC surface of the laminated film using a #6 wire bar, followed by heat treatment at 110°C for 10 minutes to form a coating layer with a thickness of 0.6 $\mu$m. Through these processes, there was obtained a laminate in which PET / COC / coating layer were laminated in this order.

(Example 8A)

A coating layer was formed on a corona-treated EVA surface of a laminated film as in Example 1A, except that PVAc-b-P(AN-rand-BA) (Mw of PVAc: 500; Mw of P(AN-rand-BA): 400; AN/BA molar ratio=1/0.11; and volume fraction of P(AN-rand-BA): 0.48) was used as a block copolymer.

(Comparative Example 1A)

As a block copolymer, PVAc-b-P(AN-rand-BA) (Mw of PVAc: 12,500; Mw of P(AN-rand-BA): 12,000; AN/BA molar ratio=1/0.09; and volume fraction of P(AN-rand-BA): 0.50) was prepared. As in Example 1A, a 5 mass% solution (coating agent) was attempted to be prepared by dissolving this block copolymer into MEK; however, the block copolymer was not dissolved. Therefore, no coating layer was formed.

(Comparative Example 2A)

A coating layer was formed on a corona-treated EVA surface of a laminated film as in Example 1A, except that PVAc-b-P(AN-rand-BA) (Mw of PVAc: 12,500; Mw of P(AN-rand-BA): 11,000; AN/BA molar ratio=1/0.9; and volume fraction of P(AN-rand-BA): 0.49) was used as a block copolymer.

(Comparative Example 3A)

A coating layer was formed on a corona-treated EVA surface of a laminated film as in Example 1A, except that PVAc-b-P(AN-rand-BA) (Mw of PVAc: 15,000; Mw of P(AN-rand-BA): 7,500; AN/BA molar ratio=1/0.5; and volume fraction of P(AN-rand-BA): 0.34) was used as a block copolymer.

(Comparative Example 4A)

A coating layer was formed on a corona-treated EVA surface of a laminated film as in Example 1A, except that PVAc-b-P(AN-rand-BA) (Mw of PVAc: 7,500; Mw of P(AN-rand-BA): 15,000; AN/BA molar ratio=1/0.5; and volume fraction of P(AN-rand-BA): 0.68) was used as a block copolymer.

Table 1 shows laminated films (support substrate / heat sealable substrate), and block copolymers and liquid media used for the coating agents of Examples 1A to 8A and Comparative Examples 1A to 4A. For each block copolymer, the polymers forming the blocks (A) and (B), Mw thereof, nitrile/alkyl molar ratio (AN/BA molar ratio or AN/OA molar ratio) and volume fraction of the block (A), and Mw of the whole block copolymer are shown. The nitrile/alkyl molar ratio is a molar ratio of the nitrile group-containing (meth)acrylic monomer units / alkyl group-containing (meth)acrylic monomer units.

(Example 1B)

EVA (NOVATEC™ EVA manufactured by Mitsubishi Chemical Corporation) was extruded onto a PET film (E5100 with a thickness of 12 $\mu$m manufactured by Toyobo Co., Ltd.) to obtain a laminated film (EVA thickness: 30 $\mu$m). The EVA surface of the obtained laminated film was corona-treated.

Separately, a polyvinyl acetate-b-polyacrylonitrile (PVAc-b-PAN) block copolymer (Mw of PVAc: 12,500; Mw of PAN: 11,000, and volume fraction of PAN: 0.48) was dissolved into ethyl acetate to obtain a 1 mass% solution (coating agent).

The 1 mass% solution was applied once to the corona-treated EVA surface of the laminated film using a #6 wire bar. Then, heat treatment was performed at 105°C for 10 minutes to form a coating layer with a thickness of 0.5 μm. Through these processes, there was obtained a laminate in which PET / EVA / block copolymer layer were laminated in this order.

(Example 2B)

EVA (NOVATEC™ EVA manufactured by Mitsubishi Chemical Corporation) was extruded onto a PET film (E5100 with a thickness of 12 μm manufactured by Toyobo Co., Ltd.) to obtain a laminated film (EVA thickness: 30 μm).
Separately, 100 parts of polyvinyl acetate-b-poly(methacrylic acid 2-hydroxyethyl-methyl methacrylate-acrylonitrile) (PVAc-b-P(MMA-HEMA-AN)) block copolymer (Mw of PVAc: 40,000; Mw of P(MMA-HEMA-AN): 23,000; and volume fraction of PVAc: 0.63), and 15 parts of hexamethylene diisocyanate trimer (CORONATE HL manufactured by Nippon Polyurethane Co., Ltd.) were dissolved into ethyl acetate to obtain a solution (coating agent) with a solid content of 1.2 mass%.
The 1.2 mass% solution was applied once to a corona-treated EVA surface of the laminated film using a #6 wire bar. Then, heat treatment was performed at 105°C for 10 minutes to form a coating layer with a thickness of 1.1 μm. Through these processes, there was obtained a laminate in which PET / EVA / block copolymer layer were laminated in this order.

(Example 3B)

A PET film (E5100 with a thickness of 12 μm manufactured by Toyobo Col, Ltd.) and a linear low density polyethylene (LLDPE) film were bonded together to obtain a laminated film. The LLDPE surface of the obtained laminated film was corona-treated.
Separately, a polyacrylonitrile-b-poly dodecyl methacrylate (PAN-b-PDMA) block copolymer (Mw of PAN: 11,000; Mw of PDMA: 10,000, and volume fraction of PAN: 0.53) was dissolved into PGMEA to obtain a 1 mass% solution (coating agent).
The 1 mass% solution was applied once to the corona-treated LLDPE surface of the laminated film using a #6 wire bar. Then, heat treatment was performed at 110°C for 10 minutes to form a coating layer with a thickness of 0.6 μm. Through these processes, there was obtained a laminate in which PET / LLDPE / block copolymer layer were laminated in this order.

(Example 4B)

A PET film (E5100 with a thickness of 12 μm manufactured by Toyobo Co., Ltd.) and a COC film (Coxec TCS-2 with a thickness of 20 μm manufactured by Kurabo Industries Ltd.) were bonded together to obtain a laminated film. The COC surface of the laminated film was corona-treated.
Separately, a polyacrylonitrile-b-polycycloolefin (PAN-b-COP) block copolymer (Mw of PAN: 9,900; Mw of COP: 10,000, and volume fraction of PAN: 0.47) was dissolved into PGMEA to obtain a 1 mass% solution (coating agent).
The 1 mass% solution was applied once to the corona-treated COC surface of the laminated film using a #6 wire bar. Then, heat treatment was performed at 110°C for 10 minutes to form a coating layer with a thickness of 0.6 μm. Through these processes, there was obtained a laminate in which PET / COC / block copolymer layer were laminated in this order.

(Example 5B)

A laminate to which a block copolymer PVAc-b-PAN was applied was obtained as in Example 1B except that, in the block copolymer, Mw of PVAc was 500, and Mw of PAN was 400.

(Comparative Example 1B)

A laminate to which a block copolymer PVAc-b-PAN was applied was obtained as in Example 1B except that, in the black copolymer, Mw of PVAc was 14,000, Mw of PAN was 7,000, and volume fraction of PVAc was 0.66.
Table 5 shows laminated films (support substrate / heat sealable substrate), and block copolymers used for the coating agents of Examples 1B to 5B and Comparative Example 1B. For each block copolymer, the polymers forming the blocks (A) and (B), Mw thereof, volume fraction of the block (A), and Mw of the whole block copolymer are shown.
The block copolymers of these examples were prepared according to the procedure described in Example 2 of JP 2006-299278 A.
The volume fraction of the block (A) of each block copolymer was obtained through the following procedure.

For example, in the case where the AN/BA molar ratio was 1/0.5 and the Mw was 12,000, the respective volumes of AN and BA in the block (A) were firstly calculated to be 4,727 $cm^3/g$ and 6,078 $cm^3/g$ using the molecular weights and the densities of the monomers AN and BA, and then the obtained volumes were added up to thereby obtain a volume of the block (A). The volume fraction of the block (A) was calculated by dividing the volume of the block (A) by the sum of the volumes of the blocks (A) and (B).

(Examination of microphase separation structure)

A sample was prepared for the laminate of each example by embedding the laminate in a UV curable resin, and curing the UV curable resin by UV irradiation. The obtained sample was sliced using a microtome to expose a cross section of the laminate. The cross section was dyed using iodine or ruthenium oxide, and the coating layer was observed using a scanning electron microscope (SEM). If a lamellar structure (lamellar microphase separation structure) was uniformly formed, the sample was evaluated to be good, and if no lamellar structure was formed, the sample was evaluated to be poor. The results of Examples 1A to 8A and Comparative Examples 1A to 4A are shown in Table 1, and the results of Examples 1B to 5B and Comparative Example 1B are shown in Table 4.
Comparative Example 1A having no coating layer is shown as being poor.

(Evaluations)

<Solubility>

3 parts by mass of the block copolymer of each example was mixed with 97 parts by mass of a liquid medium to prepare a block copolymer solution which was left to stand for 1 hour under a room temperature (25°C) environment. Then, the block copolymer solution was visually observed and evaluated according to the following criteria. As liquid media, MEK, toluene, ethyl acetate, anone (cyclohexanone), and PGMEA were used. The results of Examples 1A to 8A and Comparative Examples 1A to 4A are shown in Table 2.
Good: The block copolymer solution was transparent and no precipitation or turbidity was visually observed.
Poor: Precipitation or turbidity was visually observed in the block copolymer solution.
From the above results, solubility of each block copolymer to the liquid media was evaluated according to the following criteria. The results of Examples 1A to 8A and Comparative Examples 1A to 4A are shown in Table 3, and the results of Examples 1B to 5B and Comparative Example 1B are shown in Table 4.
Good: Solubility in any of the liquid media of MEK, toluene, ethyl acetate, anone, and PGMEA was good.
Poor: Solubility in at least one of the liquid media of MEK, toluene, ethyl acetate, anone, and PGMEA was poor.

(Coating suitability)

The coating layer formed in each example was visually observed, and coating suitability of the coating agent of the example was evaluated according to the following criteria. The results of Examples 1A to 8A and Comparative Examples 1A to 4A are shown in Table 3, and the results of Examples 1B to 5B and Comparative Example 1B are shown in Table 4.
Good: Coating was uniform without unevenness.
Poor: Coating was not uniform with the occurrence of unevenness and mixing of foreign matter.
Comparative Example 1A having no coating layer is shown as being poor.

<Non-adsorptivity>

The laminate of each example was cut into two rectangular segments (100 mm × 100 mm) for use as a sample, and these segments were overlapped with each other so that the coating layers faced each other, followed by heat-sealing three of the four sides of the segments under the conditions of 0.15 MPa, 190°C, and 1 second to form a packaging bag.
0.1 g of 1-menthol was encapsulated in the obtained packaging bag, followed by tightly heat-sealing the remaining one side under the same conditions as above, and the packaging bag was left to stand for 3 days in a 40°C and 75% RH environment. Then, the packaging bag was opened and the 1-menthol was removed. Then, after the packaging bag was exposed to air for 10 minutes, the residual scent of the 1-menthol was sensorily evaluated according to the following criteria. The fewer the residual scent is, the better the non-adsorptivity becomes. The results of Examples 1A to 8A and Comparative Examples 1A to 4A are shown in Table 3, and the results of Examples 1B to 5B and Comparative Example 1B are shown in Table 4.
Good: Almost no residual scent was sensed.

Fair: A little residual scent was sensed.

Poor: A considerable amount of residual scent was sensed.

Comparative Example 1A having no coating layer was not evaluated for non-adsorptivity.

<Heat sealing strength>

The laminate of each example was cut into two rectangular segments (50 mm × 50 mm) for use as a sample, and these segments were overlapped with each other so that the coating layers faced each other, followed by heat-sealing one edge of the segments over a width of 15 mm under the conditions of 0.15 MPa, 190°C, and 1 second. The heat-sealed sample was cut into strips each having a width of 15 mm which were subjected to T-type peeling test using a tension tester under the conditions of 23°C, 65% RH, and 300 mm/min tensile rate, to measure peeling strength. 10 samples were prepared for measurement, and an average of the measured values was taken to be the heat sealing strength of the laminate.

Separately, the laminated film (before forming a coating layer) of each example was cut into two rectangular segments (50 mm × 50 mm) for use as a sample, and these segments were overlapped with each other so that the heat sealing surfaces (EVA surfaces, COC surfaces, or LLDPE surfaces) faced each other, followed by heat-sealing one edge of the segments over a width of 15 mm under the conditions of 0.15 MPa, 190°C, and 1 second. The heat-sealed sample was cut into strips each having a width of 15 mm, followed by measuring the peeling strength as described above, and an average of the measured values was taken to be the heat sealing strength of the laminated film.

From the measurement results, rate of decrease in heat sealing strength was calculated from the following formula. The results are shown in Table 3.

$$\text{Rate of decrease (\%) in heat sealing strength} = (\text{Heat sealing strength of laminated film}$$

$$(\text{N/mm}) - \text{Heat sealing strength of laminate (N/mm)}) / \text{Heat sealing strength of laminated film}$$

$$(\text{N/mm}) \times 100$$

Based on the calculated rate of decrease, heat sealing strength of each laminate was evaluated according to the following criteria. The results of Examples 1A to 8A and Comparative Examples 1A to 4A are shown in Table 3, and the results of Examples 1B to 5B and Comparative Example 1B are shown in Table 4.

Good: Rate of decrease in heat sealing strength was less than 10%.

Poor: Rate of decrease in heat sealing strength was 10% or more.

Comparative Example 1A having no coating layer was not evaluated for heat sealing strength.

[Table 1]

| | Laminated film | Coating agent | | | | | | | Liquid medium | Coating layer |
| | | Block copolymer | | | | | | | | |
| | | Block (B) | | Block (A) | | | | Mw | | |
| | | Polymer | Mw | Polymer | Mw | Nitril/alkyl molar ratio | Volume fraction | | | Lamellar structure |
| Ex. 1A | PET/EVA | PVAc | 12,500 | P(AN-rand-BA) | 11,000 | 1/0.11 | 0.48 | 23,500 | MEK | Good |
| Ex. 2A | PET/EVA | PVAc | 12,500 | P(AN-rand-BA) | 12,000 | 1/0.5 | 0.50 | 24,500 | MEK | Good |
| Ex. 3A | PET/EVA | PVAc | 12,500 | P(AN-rand-BA) | 11,500 | 1/0.8 | 0.49 | 24,000 | MEK | Good |
| Ex. 4A | PET/EVA | PVAc | 12,500 | P(AN -rand-OA) | 10,000 | 1/0.10 | 0.48 | 22,500 | MEK | Good |
| Ex. 5A | PET/EVA | PVAc | 12,500 | P(AN -rand-OA) | 13,000 | 1/0.5 | 0.52 | 25,500 | MEK | Good |
| Ex. 6A | PET/EVA | PVAc | 12,500 | P(AN -rand-OA) | 12,000 | 1/0.78 | 0.47 | 24,500 | MEK | Good |
| Ex. 7A | PET/COC | COP | 10,000 | P(AN-rand-BA) | 9,900 | 1/0.5 | 0.48 | 19,900 | PGMEA | Good |
| Ex. 8A | PET/EVA | PVAc | 500 | P(AN-rand-BA) | 400 | 1/0.11 | 0.48 | 900 | MEK | Good |
| Comp. Ex. 1A | PET/EVA | PVAc | 12,500 | P(AN-rand-BA) | 12,000 | 1/0.09 | 0.50 | 24,500 | MEK | Poor |
| Comp. Ex. 2A | PET/EVA | PVAc | 12,500 | P(AN-rand-BA) | 11,000 | 1/0.9 | 0.49 | 23,500 | MEK | Good |
| Comp. Ex. 3A | PET/EVA | PVAc | 15,000 | P(AN-rand-BA) | 7,500 | 1/0.5 | 0.34 | 22,500 | MEK | Poor |
| Comp. Ex. 4A | PET/EVA | PVAc | 7,500 | P(AN-rand-BA) | 15,000 | 1/0.5 | 0.68 | 22,500 | MEK | Poor |

[Table 2]

| | Solubility | | | | |
|---|---|---|---|---|---|
| | MEK | Toluene | Ethyl acetate | Anon | PGMEA |
| Ex. 1A | Good | Good | Good | Good | Good |
| Ex. 2A | Good | Good | Good | Good | Good |
| Ex. 3A | Good | Good | Good | Good | Good |
| Ex. 4A | Good | Good | Good | Good | Good |
| Ex. 5A | Good | Good | Good | Good | Good |
| Ex. 6A | Good | Good | Good | Good | Good |
| Ex. 7A | Good | Good | Good | Good | Good |
| Ex. 8A | Good | Good | Good | Good | Good |
| Comp. Ex. 1A | Poor | Poor | Good | Poor | Poor |
| Comp. Ex. 2A | Good | Good | Good | Good | Good |
| Comp. Ex. 3A | Good | Good | Good | Good | Good |
| Comp. Ex. 4A | Good | Good | Good | Good | Good |

[Table 3]

| | Solubility | Coating suitability | Non-adsorptivity | Heat sealing strength (Rate of decrease %) |
|---|---|---|---|---|
| Ex. 1A | Good | Good | Good | Good (3) |
| Ex. 2A | Good | Good | Good | Good (6) |
| Ex. 3A | Good | Good | Good | Good (8) |
| Ex. 4A | Good | Good | Good | Good (4) |
| Ex. 5A | Good | Good | Good | Good (7) |
| Ex. 6A | Good | Good | Good | Good (9) |
| Ex. 7A | Good | Good | Good | Good (6) |
| Ex. 8A | Good | Poor | Fair | Good (3) |
| Comp. Ex. 1A | Poor | Poor | Poor | Poor (-) |
| Comp. Ex. 2A | Good | Good | Poor | Good (5) |
| Comp. Ex. 3A | Good | Good | Poor | Good (4) |
| Comp. Ex. 4A | Good | Good | Fair | Poor (21) |

[Table 4]

| | Lamellar structure | Coating suitability | Non-adsorptivity | Heat sealing strength |
|---|---|---|---|---|
| Ex. 1B | Good | Good | Good | Good |
| Ex. 2B | Good | Good | Good | Good |
| Ex. 3B | Good | Good | Good | Good |
| Ex. 4B | Good | Good | Good | Good |
| Ex. 5B | Good | Poor | Fair | Good |
| Comp. Ex. 1B | Poor | Good | Poor | Good |

[Table 5]

| | | Block copolymer | | | | | Mw |
|---|---|---|---|---|---|---|---|
| | | Block (B) | | Block (A) | | | |
| | | Polymer | Mw | Polymer | Mw | Volume fraction | |
| Ex. 1B | PET/EVA | PVAc | 12,500 | PAN | 11,000 | 0.48 | 23,500 |
| Ex. 2B | PET/EVA | PVAc | 40,000 | P(MMA-HEMA-AN) | 23,000 | 0.63 | 63,000 |
| Ex. 3B | PET/LLDPE | PDMA | 10,000 | PAN | 11,000 | 0.53 | 21,000 |
| Ex. 4B | PET/COC | COP | 10,000 | PAN | 9,900 | 0.47 | 19,900 |
| Ex. 5B | PET/EVA | PVAc | 500 | PAN | 400 | 0.48 | 900 |
| Comp. Ex. 1B | PET/EVA | PVAc | 14,000 | PAN | 7,000 | 0.66 | 21,000 |

As can be understood from the results shown in Table 2, the block (A) having 0.1 mol or more of alkyl group-containing (meth)acrylic monomer units with respect to 1 mol of nitrile group-containing (meth)acrylic monomer units could improve solubility of the block copolymer to various liquid media.

As shown in Table 3, Examples 1A to 7A showed good solubility, coating suitability, non-adsorptivity, and heat sealing strength.

Example 8A showed good solubility and heat sealing strength. However, due to the Mw of the block copolymer being less than 1,000, Example 8A was poor in coating suitability and inferior in non-adsorptivity to Examples 1A to 7A. This is considered to be because coating unevenness occurred during application of the coating agent to produce areas having no non-adsorptive layer on the sealant surface of the laminate, and thus adsorption of the 1-menthol into the laminate progressed.

Comparative Example 1A was poor in solubility because, in the block (A), the proportion of the alkyl group-containing (meth)acrylic monomer units was less than 0.1 mol with respect to 1 mol of the nitrile group-containing (meth)acrylic monomer units.

Comparative Example 2A was poor in non-adsorptivity because, in the block (A), the proportion of the alkyl group-containing (meth)acrylic monomer units was more than 0.8 mol with respect to 1 mol of the nitrile group-containing (meth)acrylic monomer units.

Comparative Example 3A was poor in non-adsorptivity because the volume fraction of the block (A) was high, and no lamellar structure was formed. This is considered to be because the block (A) could not form a continuous film, and thus adsorption of the 1-menthol progressed from the areas having no non-adsorptive layer.

Comparative Example 4A showed poor heat sealing strength because the volume fraction of the block (A) was low, and no lamellar structure was formed. Also, Comparative Example 4A was inferior in non-adsorptivity to Examples 1A to 7A.

As can be understood from the results of Examples 1B to 4B shown in Table 4, use of the block copolymer formed of a polymer block having a main-chain or side-chain structure similar to the sealant film and a non-adsorptive polymer block could achieve non-adsorption characteristics while maintaining heat sealing strength.

Example 5B showed good solubility and heat sealing strength. However, due to the block copolymer having a weight average molecular weight of less than 1,000, Example 5B showed poor coating suitability, and caused coating unevenness due to the lamellar film becoming considerably thin. Consequently, it is considered that, in Example 5B, adsorption of the 1-menthol into the sealant film progressed in the areas having no non-adsorptive layer, and thus Example 5B was inferior in non-adsorptivity to Examples 1B to 4B.

On the other hand, the block copolymer of Comparative Example B1 had a volume fraction out of the range of 0.35 or more and 0.65 or less, and thus formed no lamellar structure and exhibited no non-adsorptivity. This is considered to be because the non-adsorptive block could not form a continuous film, and thus adsorption of the 1-menthol progressed from the areas having no non-adsorptive layer.

From the studies shown above, it became obvious that the coating agent for modifying a substrate and the laminate according to the present invention could achieve non-adsorption characteristics without deteriorating the sealing strength of the heat sealing film.

[Industrial Applicability]

The coating agent for modifying a substrate according to the present invention can impart good non-adsorptivity to the heat sealing surface of a heat sealable substrate. Furthermore, after impartment of non-adsorptivity, the heat sealing surface has good heat sealability and accordingly, for example, when such heat sealing surfaces are heat-sealed together, high heat sealing strength can be achieved. Furthermore, since the block copolymer sufficiently dissolves into a low-boiling solvent, such as MEK, a low-boiling solvent can be used as a liquid medium to thereby reduce processing load during coating.

The laminate of the present invention has a heat sealing surface having good non-adsorptivity and good heat sealability. Therefore, the laminate of the present invention can be used as packaging materials for pharmaceuticals, cosmetics, and the like, and, in particular, as packaging materials for liquids. When the laminate of the present invention is used as packaging materials for pharmaceuticals, cosmetics, and the like, the medical ingredients can be prevented from being adsorbed to the packaging materials, which would otherwise cause functional deterioration.

[Reference Signs List]

- 100    Block copolymer
- 101    Block (A)
- 102    Block (B)
- 200    Laminate
- 201    Coating layer
- 202    Non-adsorptive layer
- 203    Adhesive/fusible layer
- 204    Heat sealable substrate

**Claims**

1. A coating agent for modifying a heat sealable substrate, the coating agent being applied to a heat sealing surface of a heat sealable substrate, wherein

    the coating agent contains a block copolymer that can form a lamellar microphase separation structure, and a liquid medium;
    the block copolymer has a first block (A1) forming a non-adsorptive layer, and a block (B1) forming a layer that can be adhered to or fused to the heat sealable substrate; and
    the first block (A1) is formed of a copolymer having nitrile group-containing (meth)acrylic monomer units and alkyl group-containing (meth)acrylic monomer units, the alkyl group-containing (meth)acrylic monomer units being contained in a proportion of 0.1 mol or more and 0.8 mol or less with respect to 1 mol of the nitrile group-containing (meth)acrylic monomer units.

2. The coating agent for modifying a heat sealable substrate according to claim 1, wherein the block copolymer has a weight average molecular weight of 1,000 or more.

3. The coating agent for modifying a heat sealable substrate according to claim 1 or 2, wherein the block copolymer is a diblock copolymer in which the first block (A1) has a volume fraction of 0.35 or more and 0.65 or less.

4. The coating agent for modifying a heat sealable substrate according to any one of claims 1 to 3, wherein the block (B 1) is formed of a polymer having nitrile group-containing (meth)acrylic monomer units, a copolymer having reactive functional group-containing (meth)acrylic monomer units and nitrile group-containing (meth)acrylic monomer units, a polymer having (meth)acrylic monomer units containing a side group that can be adhered to or fused to the heat sealable substrate, a polymer having functional group-containing vinyl monomer units, or a polymer having cyclic olefin units.

5. A laminate, wherein

    the laminate includes a heat sealable substrate and a coating layer formed on a heat sealing surface of the heat sealable substrate;
    the coating layer has a lamellar microphase separation structure formed of a block copolymer;
    the block copolymer has a first block (A1) forming a non-adsorptive layer, and a block (B1) forming a layer that can be adhered to or fused to the heat sealable substrate; and

the first block (A1) is formed of a copolymer having nitrile group-containing (meth)acrylic monomer units and alkyl group-containing (meth)acrylic monomer units, the alkyl group-containing (meth)acrylic monomer units being contained in a proportion of 0.1 mol or more and 0.8 mol or less with respect to 1 mol of the nitrile group-containing (meth)acrylic monomer units.

6. A method of producing a laminate, comprising applying the coating agent for modifying a heat sealable substrate according to any one of claims 1 to 4 to a heat sealing surface of a heat sealable substrate, and heat-treating the applied coating agent.

7. A coating agent for modifying a heat sealable substrate, the coating agent being applied to a heat sealing surface of a heat sealable substrate, wherein

the coating agent contains a block copolymer and a liquid medium;

the block copolymer has a second block (A2) forming a non-adsorptive layer, and a block (B2) forming a layer that can be adhered to or fused to the heat sealable substrate; and

the second block (A2) is any one of a nitrile group-containing (meth)acrylic polymer, a copolymer obtained by copolymerizing reactive functional group-containing (meth)acrylic monomer units, which can react with a curing agent, with nitrile group-containing (meth), a functional group-containing vinyl polymer, and a cyclic olefin polymer; and

the second block (A2) has a volume fraction of 0.35 or more and 0.65 or less.

8. The coating agent for modifying a substrate according to claim 7, wherein the block copolymer has a weight average molecular weight of 1,000 or more.

9. The coating agent for modifying a substrate according to claim 7 or 8, wherein the block (B2) is a block different from the second block (A2) and is any one of a nitrile group-containing (meth)acrylic polymer, a copolymer obtained by copolymerizing reactive functional group-containing (meth)acrylic monomer units, which can react with a curing agent and a reactive functional group on a substrate surface, with nitrile group-containing (meth)acrylic monomer units, a (meth)acrylic polymer containing a side chain that can be adhered to or fused to a thermoplastic resin substrate or a copolymer thereof, a functional group-containing vinyl polymer, and a cyclic olefin copolymer.

10. A laminate, wherein

the laminate includes a heat sealable substrate and a coating layer formed on a heat sealing surface of the heat sealable substrate;

the coating layer has a lamellar microphase separation structure formed of a block copolymer;

the block copolymer has a second block (A2) forming a non-adsorptive layer, and a block (B2) forming a layer that can be adhered to or fused to the heat sealable substrate;

the second block (A2) is any one of a nitrile group-containing (meth)acrylic polymer, a copolymer obtained by copolymerizing reactive functional group-containing (meth)acrylic monomer units, which can react with a curing agent, with nitrile group-containing (meth), a functional group-containing vinyl polymer, and a cyclic olefin polymer; and

the second block (A2) has a volume fraction of 0.35 or more and 0.65 or less.

11. A method of producing a laminate, comprising applying the coating agent for modifying a heat sealable substrate according to any one of claims 7 to 9 to a heat sealing surface of a heat sealable substrate, and heat-treating the applied coating agent.

FIG.1

100

101

102

FIG.2

200

202
201
203

204

## INTERNATIONAL SEARCH REPORT

| | International application No. |
|---|---|
| | PCT/JP2020/033173 |

**A. CLASSIFICATION OF SUBJECT MATTER**
B05D 7/24(2006.01)i; B32B 27/00(2006.01)i; B32B 27/30(2006.01)i; C09D 153/00(2006.01)i; C09D 201/00(2006.01)i
FI: C09D153/00; B32B27/00 A.; B32B27/30 A.; B05D7/24 302P; C09D201/00
According to International Patent Classification (IPC) or to both national classification and IPC

**B. FIELDS SEARCHED**

Minimum documentation searched (classification system followed by classification symbols)
B05D7/24; B32B27/00; B:2B27/30; C09D153/00; C09D201/00; C08L53/00

Documentation searched other than minimum documentation to the extent that such documents are included in the fields searched
|  |  |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2018-115320 A (UNITIKA LTD.) 26 July 2018 (2018-07-26) entire text | 1-11 |
| A | JP 2014-172966 A (TOPPAN PRINTING CO., LTD.) 22 September 2014 (2014-09-22) entire text, all drawings | 1-11 |
| A | JP 2015-229765 A (TOPPAN PRINTING CO., LTD.) 21 December 2015 (2015-12-21) entire text, all drawings | 1-11 |
| A | JP 2017-95649 A (TOPPAN PRINTING CO., LTD.) 01 June 2017 (2017-06-01) entire text, all drawings | 1-11 |
| A | JP 2010-84139 A (NIPPON PAPER CHEMICALS CO., LTD.) 15 April 2010 (2010-04-15) entire text | 1-11 |
| A | JP 2007-291173 A (UNITIKA LTD.) 08 November 2007 (2007-11-08) entire text | 1-11 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 October 2020 (28.10.2020) | 10 November 2020 (10.11.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT
Information on patent family members

International application no.

PCT/JP2020/033173

| Patent Documents referred in the Report | Publication Date | Patent Family | Publication Date |
|---|---|---|---|
| JP 2018-115320 A | 26 Jul. 2018 | (Family: none) | |
| JP 2014-172966 A | 22 Sep. 2014 | (Family: none) | |
| JP 2015-229765 A | 21 Dec. 2015 | (Family: none) | |
| JP 2017-95649 A | 01 Jun. 2017 | (Family: none) | |
| JP 2010-84139 A | 15 Apr. 2010 | (Family: none) | |
| JP 2007-291173 A | 08 Nov. 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019160616 A
- JP 2020075518 A
- JP H8143452 A
- JP 5656694 B
- JP 6241590 B
- JP 6402973 B
- JP 2006299278 A

**Non-patent literature cited in the description**

- **L. LEIBLER.** Theory of Microphase Separation in Block Copolymers. *Macromolecules,* 1980, vol. 13, 1602-1617